# EUROPEAN PATENT APPLICATION

(11) **EP 4 806 574 A1**
(43) Date of publication of application: **16.09.2026**
(21) Application number: 25162842.6
(22) Date of filing: 11.03.2025
(51) Int. Cl.: B23K 9/10, B23K 9/167, B23K 9/29, B23K 10/00, H05H 1/34

(54) **HOLLOW CATHODE**

(71) Applicant: Linde GmbH, 82049 Pullach (DE)
(72) Inventor: Hussary, Nakhleh A., 85737 Ismaning (DE); Siewert, Erwan, 85283 Niederlauterbach (DE)
(74) Representative: Lu, Jing

(57) **Abstract**

An electrode comprising a hollow cavity in the interim, preferably this cavity extends over the complete axial extent of the electrode, wherein it comprises an electrode tip and an electrode holder, wherein a wire guiding tube is provided within the cavity which has a setback of at least 3 mm to the electrode tip.

## Description

The present application generally relates to an electrode for a welding torch, and more particularly to a novel design and configuration of the electrode for plasma welding. Related domains include soldering, welding, cladding or plasma heating, cutting.

A person skilled in the art is familiar with the tungsten inert gas (TIG) welding, which is used for example for deposition welding, welding or brazing of one, two or more work piece made of metallic materials. The workpiece and a non-consumable electrode are electrically connected to a welding current source. An electric arc is established between the tungsten electrode and the workpiece that is being processed. The workpiece is at least partially melted and forms a melt pool. A separate filler may be used to add material to the weld joint if needed. The weld pool is protected from atmospheric contamination by an inert gas, typically argon or helium. TIG-welding is known for producing high-quality welds and is commonly used in industries where precision and control are important, such as aerospace, automotive and piping applications.

It is also known to use a hollow electrode in TIG welding as disclosed in US2017008116. The hollow electrode is a tube-shaped electrode made of tungsten which creates a hollow cavity in its interior. In particular, this cavity extends over the complete axial extent of the electrode. US2017008116 teaches to feed an energized wire through the hollow cavity of the electrode to increase the melting efficiency and overcome the disadvantage of the absent rotation symmetry.

US2015027997 also discloses to feed a filler material through a hollow electrode of a welding torch. It further teaches to have a guidance means designed to advance the welding filler material mechanically along an axis of a section of the welding torch. The guidance means is constructed as a guide sleeve with a suitable diameter.

In such TIG process with hollow electrode, the wire is fed continuously centrally through the cavity of the hollow electrode and melts at the tip of the wire at the front end by the electrical arc between the electrode and the workpiece. The molten drop of the wire will be detached from the wire and fall into the weld pool. The guidance means is provided at internal surface of the hollow electrode which guides the feeding wire to the direction of the workpiece and prevents the wire from touching the inside of the hollow electrode. This guide means is necessary to prevent the wire being overheated by the electrode and to ensure the wire is fed directionally to the workpiece.

It is desirable to further improve the wire feeding process to increase the melting efficiency and melting rate of the wire in a cost-efficient way.

The present invention is related to an electrode comprising a hollow cavity in its interim. Preferably, this hollow cavity extends along the complete axial extent of the electrode. The electrode comprises further an electrode tip and an electrode holder. There is a wire guiding tube provided within the hollow cavity which extends in direction of the electrode tip to a position which has a setback of at least 3mm to the electrode tip. The setback is defined by the electrode tip and the tip of the wire guiding tube.

Preferably, the electrode tip is made of high-melting point metal as like tungsten and the electrode holder is typically made of copper or brass due to its good conduction performance of heat and electricity. Copper or brass helps to dissipate heat from the electrode and maintain its temperature during welding. The electrode holder is usually designed to hold the electrode tip securely in place while allowing enough freedom of movement to strike an arc and maintain the correct welding position. Preferably, the electrode tip, e.g., the tungsten piece, extends outside the electrode holder, e.g., the copper piece, and the electrode tip extends also within the electrode holder. These two pieces design of electrode improves the life and survivability of the electrode specially at higher currents.

Preferably, the inner diameter of the hollow electrode ranges between 3 - 10 mm for wire sizes ranging between 0.5 - 6 mm. Further, the inner diameter of the hollow electrode is a function of the wire size, the main current and the wire feeding rate.

The wall thickness of the hollow electrode may range between 0.2 - 2 mm for low currents up to 200 A or 2 - 6 mm for higher currents up to 1200 A.

Preferably, the electrode is water-cooled which is realized by entering water on one side, rotates around the electrode and flows back to exit. The distance between arc attachment on the electrode and the water-cooled part is minimized and the contact surface between electrode and water-cooled part is increased.

In one embodiment, the setback range between 3 and 20mm, and preferably between 5mm and 15mm, offers a balance between wire stability and flexibility, allowing for a variety of applications with different precision requirements. Preferably, the setback is a function of current. The specified setback range can accommodate different wire diameters and stiffness, providing versatility in the electrode's use across different operational settings. By optimizing the setback distance, the electrode can reduce the risk of wire buckling or bending, which can lead to improved performance and reduced maintenance needs.

The setback of the wire guiding tube to the electrode tip ensures that the wire is guided with precision, reducing the likelihood of misalignment during operation and it further enhances the stability of the wire as it exists the electrode, which can improve the accuracy of the electrode's application in certain procedures. Furthermore, the setback enables the wire to be heated before it exists the electrode tip which increases the melting rate of the wire and thus ensures a high deposition rate.

In one embodiment, the wire guiding tube comprises ceramic. The wire guiding tube could also be made of only ceramic. The use of ceramic in the wire guiding tube has high melting temperature to avoid melting. The ceramic component of the wire guiding tube can also offer superior wear resistance, extending the service life of the wire guiding tube by reducing wear from wire friction. The wire guiding tube could be water cooled and/or made of a metallic material with a good heat conduction. This allows shorter setback and more robustness. The wire guiding tube could also be made of brass and ceramic. Combining brass and ceramic materials leverages the conductivity of brass with the insulating properties of ceramic, resulting in a wire guiding tube that is both efficient in conducting electricity and resistant to thermal degradation. This kind of wire guiding tube is particularly preferred when joule heating is needed to preheat the wire which increases the welding and metal deposition.

In one embodiment, a circular gap is provided between the wire guiding tube and the electrode, preferably the electrode tip, wherein the gap is between 0.25 mm and 3 mm, preferable between 1mm and 2 mm. The presence of a gap allows shielding gas passing through the electrode, avoiding heat transfer from the electrode to the wire guiding tube. It also allows for the dissipation of heat, preventing overheating and potential damage to both the electrode and the wire. It is preferable to inject a small amount of gas in the hollow electrode through this gap, which ranges between 0.1 to 10 Ipm, more preferably between 0.5 to 5 Ipm to avoid the electrode being overheated. It is especially beneficial when a plasma is formed between the electrode and the workpiece which is very hot and will rise into the hollow electrode and the wire guiding tube. This results in overheating and melting of the tube which could shorten the life of the electrode considerably.

In one embodiment, a wire straightening tool is provided prior to feeding the wire in the hollow electrode to ensure the wire maintains a central position, which can significantly enhance the precision of the electrode's application and reduces the likelihood of uneven wear on the electrode, thereby prolonging its usable life and reducing the need for frequent replacements. The wire straightening tool can also prevent the wire from melting and clogging the hollow electrode by touching the inside of the electrode, ensuring consistent performance and reducing downtime due to wire-related issues.

In one embodiment, the wire guiding tube has a rear end and a front end, wherein the distance between the front end and the electrode tip defines the length of the setback. The rear end has a larger internal diameter than at the front end. The wider feeding channel at the rear end provides a holding force to accommodate a wire feeding conduit from the torch side, so that the wire tube extending from the torch downwards will be properly connected to the wire guiding tube in the hollow electrode and thus facilitates the smooth transition of the welding wire from the torch to the electrode, thereby reducing the likelihood of wire jamming and ensuring consistent wire feed rates.

In one embodiment, a fixing mechanism is provided to attach the wire guiding tube in the hollow electrode which guarantees a repeatable and robust guiding tube attachment. The fixing mechanism could be part of the guiding tube, part of the electrode or part of the torch and it is so arranged that the wire guiding tube is fixed relative to the electrode or fixed relative to the torch.

Preferably, the wire guiding tube comprises two parts. The first part is a cylindrical tube with the constant diameter. The second part is a bigger tube which has at one end a sleeve where the first cylindrical tube can be inserted into and has a cone-like opening at the other end for connecting a wire feeding conduit from the torch side. More preferably, the first part is made of ceramic and the second part is made of metal, as like copper or brass, or high temperature plastic.

A welding torch is disclosed comprising,
- a main torch body having a rear end and a front end,
- a wire feeding conduit which extends through the main torch body for guiding a wire in direction to the front end,
- an electrode according to one of the claims 1 to 6, wherein it is connected to the front end of the main torch body.

The electrode is preferably assembled with other consumable components, such as shield cup and gas distributor, as one unit, so that the electrode can be readily connected to or detached from the welding torch together with other consumable components, which streamlines the replacement of the consumable components and reduces downtime.

In one embodiment, a gas flow passage is provided within the main torch body to inject a gas flow from the rear end of the torch along the wire feeding conduit and the wire guiding tube to the electrode. The gas may be the same type of gas as the shielding gas, or it may be of a different type of gas. The gas may be selected from He, Ar, N2 or any of its combination, as like a gas mixture of Ar and He, Ar and H2, Ar and N2 as well as a gas mixture with active gas such as Ar and O2, Ar and CO2 in ppm range to ensure survivability of the tungsten electrode. Preferably, the amount of the gas ranges between 0.1 to 10 Ipm, more preferably between 0.5 to 5lpm to avoid the electrode and the wire guiding tube being overheated. It is especially beneficial when a plasma is formed between the electrode and the workpiece which is very hot and will rise into the hollow electrode and the wire guiding tube. This results in overheating and melting of the tube which could shorten the life of the electrode considerably.

In one embodiment, the wire guiding tube is connected to the wire feeding conduit via an adaptor. The adaptor connects on one side to the wire feeding conduit extending from the rear end of the torch and connects on the other side to the wire guiding tube which is arranged in the hollow electrode. The adaptor is designed to provide holding force to keep the wire guiding tube in place. The adaptor preferably comprises slots which are particularly circumferentially distributed on the side of connecting to the wire guiding tube, which guides the gas to flow into the electrode via the wire guiding tube. The shielding gas flows along the adaptor and is divided into two directions, one flows into the electrode by virtue of the slots and the other flows into the gap between the electrode and the wire feeding tube. The use of such an adaptor can facilitate quick and easy connection of the wire feeding conduit and the wire guiding tube, so that it is not necessary to have a precise alignment of both tubes and over-pushing of the wire feeding conduit onto the wire guiding tube can be avoided. This design of the hollow electrode improves the central feeding of the wire and resolves the overheating of the wire inside the hollow electrode. It further improves the assembly of the hollow electrode, wire and the wire feeding mechanism, so the components are assembled in an easy and robust way which prolonging its usable life and reducing the need for frequent replacements. It further improves the cooling of the electrode and the wire guiding tube to enhance robustness which allows the conduction of extra current to the wire as part of the wire feeding mechanism and enhances the performance of the system by allowing to feed two different gases or gas mixes in the different pathways.

Furthermore, the invention is also related to a method of welding a workpiece using the torch comprising the specified hollow electrode. The welding process includes all possible processes as like gas metal arc welding, flux-cored arc welding, submerged arc welding, cold metal transfer welding, tungsten Inert gas welding, plasma welding etc.. In this welding process, a wire is fed via the wire feeding conduit and the wire guiding tube with a wire feeding speed in the direction of the electrode tip. A main current source is provided to connect the electrode and the workpiece, and an electrical arc is generated between the electrode and the workpiece. Preferably, the wire fed into the hollow electrode is outfit with a mechanism to control the forward and backward motion of the wire to control the metal transfer whereby a drip transfer may be achieved in the weld pool or for controlling the distance between the wire and the work piece.

The main current is conducted in a shared fashion between the main arc and the wire, as the wire extends into the arc and current is conducted in a shared manner between the plasma itself and the portion of the wire emersed in the arc. The wire is Joule heated by that part of the current conducted through the wire. The drop is then detached with a pinch effect and in a controlled fashion. The efficiency of the process is therefore increased. The amount of the current, in what in termed here as self-regulating hot wire, passing through the wire is controlled in part by the space between the hollow electrode and the wire which the radial distance ranges between 0.1mm to 6mm, preferably between 0.3mm to 3mm.

In one embodiment, the hollow electrode is negative polarized. The negative polarization of the hollow electrode in the welding process provides better arc stability and allows for improved gas flow through the electrode due to the concentration of the gas flow and ionization near the center electrode. This results in a more controlled, consistent welding process. In addition, the use of the hollow cathode can result in reduced spatter during the welding process, and this can help improve the overall quality of the weld and reduce the amount of post-weld clean-up required.

In other embodiments, the hollow electrode could also be positive polarized. It is also possible to have an alternating current switching between both modes where the period in each mode may be adjusted and the magnitude of the current for each mode is also adjusted.

In one embodiment, a separate second current is provided between the wire and the workpiece or only provided to heat a certain section of the wire without conducting the current through the workpiece to provide active joule heating which will further improves the performance and enhance the melt rate. The second current is provided to supply the preheating current to preheat the wire, with its own independent control, which enhances the deposition efficiency by ensuring the wire reaches an optimal temperature before entering the weld pool, thus reducing the thermal gradient and stress on the wire.

In another embodiment, at start up, the wire position should be retracted within the hollow electrode, preferably within the wire guiding tube, when the arc is first ignited and ramped up to full current. Subsequently, the wire feeding commences. This ensures that the wire does not melt locally and clog the hollow electrode but is properly moved forward and the metal transfer takes place to the workpiece without faults. Alternatively, one can ignite the arc and start ramping it up and at the same time the wire feeding starts ramping up at a proportional rate and the proportionality may be time varying as well. In this case also the wire will be inside the hollow electrode to begin with as before. Alternatively, the end of the wire may be flush with the electrode tip or slightly extends outside the electrode tip with a short distance shorter than 0.2mm and preferably shorter than 0.1mm Preferably, the wire should be inside the mechanism of the hollow electrode. Furthermore, the wire can be inside the hollow electrode yet extends outside the wire guiding tube, the wire can be inside the electrode and retracted inside the wire guiding tube. Alternatively, the wire is inside the hollow electrode and retracted inside the wire feeding tube inside the torch.

In one embodiment, when terminating the welding, the wire feeding speed ramps down and the main current ramps down synchronically in a proportional way to the wire feeding speed which may be time varying also. The ramping down of both speeds is matched such that the wire neither sticks into the weld pool nor burn back and clog the electrode. Preferably, the rate of current ramp down is faster than the wire feeding speed, so that the wire does not burn back into the electrode but also does not extend into the weld pool. Preferably, the ramp down phase is between 30ms to 300ms, more preferably between 50ms and 150ms. The wire extending outside of the hollow electrode is between 0.1 - 4mm. The current ramp down rate is a function of the welding current and the electrode diameter. The synchronized reduction of wire feeding speed and current at the end of the welding process ensures a smooth transition to the weld's completion, enhancing the aesthetic finish and mechanical properties of the weld.

In one embodiment, the main current can be switched from the electrode to the wire and switched back at a given frequency. This switch is controlled by a current transfer switch or pulsing the main current and the switch can also be performed based on other input signal such as the process voltage signal to control the deposition rate, which allows for precise control over the arc ignition and stability, leading to a more controlled and consistent welding process. In case the wire guiding tube is made of electrically conductive material, e.g., copper or brass, the current transfer to the wire can be controlled by a switch between the electrode and the wire. If the tube is made of non-conductive material, e.g., ceramic, the current transfer can be controlled by pulsing the main current. Current pulsing can be fixed as well as synchronized with changes in voltage signals related to the natural current transfer to the wire.

Description of the figures
Fig. 1 shows a hollow electrode according to an embodiment of the present invention.
Fig. 2 shows the hollow electrode attached to a welding torch according to an embodiment of the present invention.
Fig.3 shows a part of the wire guiding tube according to an embodiment of the present invention.
Fig. 4 shows another part of the wire guiding tube according to an embodiment of the present invention.

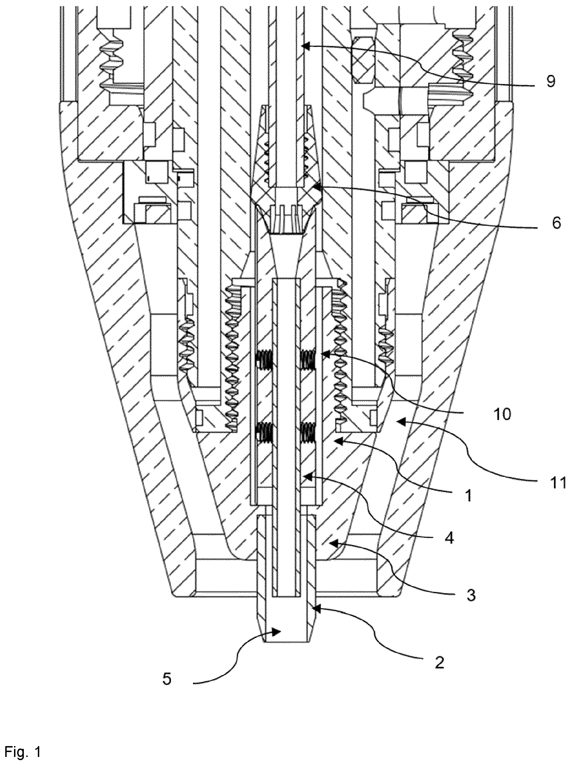

Figure 1 shows a cross-sectional view of the hollow electrode 1 according to the present invention. The image displays a detailed cross-sectional view of an electrode 1 integrated within a welding torch assembly. The hollow electrode 1 is provided with a longitudinal hollow cavity extending over the complete axial extent of the electrode 1. The electrode 1 comprises an electrode tip 2 and an electrode holder 3. Preferably, the electrode tip is made of tungsten and the electrode holder is made of copper or brass. The electrode tip 2 extends out of the electrode holder 3 in direction of the workpiece to be treated. The electrode 1 further comprises a wire guiding tube 4, shown as a centrally positioned cylindrical component, arranged within the hollow cavity, wherein the tube 4 has a setback 5 with a length of at least 3 mm, preferably between 5 and 15mm. The wire guiding tube 4 has a front end in the direction of the electrode tip 2 and has a rear end opposite to the front end. The length of the setback 5 is defined between the front end of the wire guiding tube 4 and electrode tip 2.

The figure also shows the gap 10 existing between the wire guide tube 4 and the inner surface of the electrode 1. Preferably, a small amount of gas is injected in the hollow electrode 1 through this gap 10 to avoid the electrode being overheated. It is especially beneficial when a plasma is formed between the electrode and the workpiece which is very hot and will rise into the hollow electrode and the wire guiding tube. With the gas injected through this gap, the rising hot gas will be pressed which prevents the electrode and the guiding tube from being overheated.

In a welding process, a wire, which functions as a filler metal, is continuously fed from the back of the welding torch through a wire feeding conduit 9 in the torch and the wire guiding tube 4 within the electrode in direction to the workpiece. It melts at the end of the electrode by the hot electrical arc and is deposited on the workpiece to join the material together to form a strong bond. This setback 5 between the electrode tip 2 and the wire guiding tube 4 prevents the wire from bending when it exits the electrode which will cause the wire to melt and clog hollow electrode by touching the inside of the hollow electrode. Furthermore, the setback enables the wire to be heated sufficiently without overheating before it exists the electrode which increases the melting rate of the wire and thus ensures a high deposition rate.

Figure 1 shows a front part of the welding torch which contains the wire feeding conduit 9 in the main body 8 to feed the wire forwards to the electrode 1. An adaptor 6 is provided between the wire feeding conduit 9 and the wire guiding tube 4 to provide holding force to keep the wire guiding tube in place. The adaptor 6 contains slots on the inner wall which allows gas to flow through the adaptor into the electrode. The use of such an adaptor can facilitate quick and easy connection of the wire feeding conduit 9 and the wire guiding tube 4, so that it is not necessary to have a precise alignment of both parts and over-pushing of the wire feeding conduit onto the wire guiding tube can be avoided.

Furthermore, the electrode is water-cooled by circulating water with the cooling channels 11 integrated in the main body 8 of the welding torch.

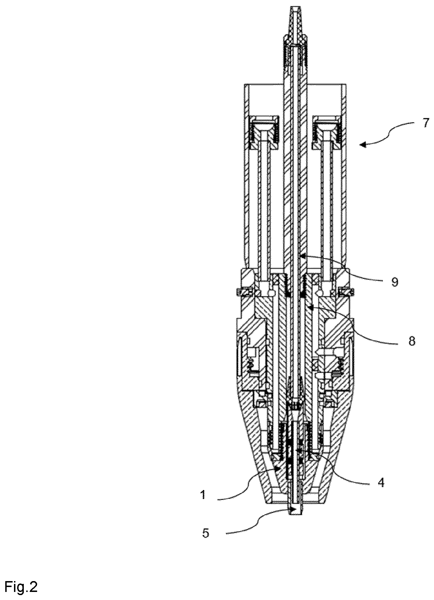

Figure 2 shows a vertical cross-sectional view of the whole welding torch 7 which is attached to the electrode 1. The welding torch is connected to different sources (not shown) with multiple channels integrated in the main body 8 to deliver gases, electrical power, cooling medium, welding wire etc. to the electrode 1 in a reliable way to ensure an optimal performance of the welding process. During the welding process, a wire is fed via the wire feeding conduit 9 and the wire guiding tube 4. Moreover, the wire fed into the hollow electrode is outfit with a mechanism to control the forward and backward motion of the wire to control the metal transfer whereby the drip transfer may be achieved in the weld pool or for controlling the distance between the wire and the work piece. Preferably, a wire straightening tool (not shown) could be arranged prior to feeding the wire in the hollow electrode or prior to the torch to ensure the wire maintains a central position in the hollow cavity which can significantly enhance the precision of the electrode's application and reduces the likelihood of uneven wear on the electrode, thereby prolonging its usable life and reducing the need for frequent replacements.

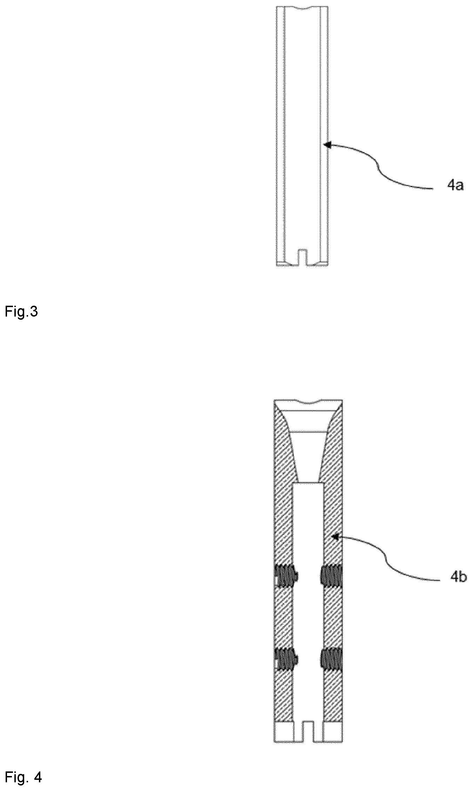

Figures 3 and 4 show a more detailed view of the wire guiding tube 4 which preferably comprises a ceramic tube 4a and a copper sleeve 4b. The ceramic tube 4a can be inserted into the copper sleeve 4b to compose the wire guiding tube. The ceramic tube 4a is inserted into the sleeve with a part still extends outside the sleeve. This stick-out part extends into the hollow cavity of the electrode tip and is used to guide the wire out of the electrode. The ceramic tube 4a has a constant diameter, while the copper sleeve 4b has at one end a greater tube where the ceramic tube can be inserted into and has a cone-like opening with a gradually increasing inner diameter at the other end for connecting to the adaptor. The tube 4a could be also fabricated with other heat-resistant material and the sleeve 4b could be also fabricated with other material as like brass or high temperature plastic. It is also possible to have the whole wire guiding tube as one piece made of ceramic.

## Claims

1. An electrode (1) comprising a hollow cavity in the interim, preferably this cavity extends over the complete axial extent of the electrode, wherein it comprises an electrode tip (2) and an electrode holder (3), **characterized in that** a wire guiding tube (4) is provided within the cavity which has a setback (5) of at least 3 mm to the electrode tip.

2. An electrode according to claim 1, wherein the setback (5) is between 3 and 20mm, preferably between 5 and 15mm.

3. An electrode according to claim 1 or 2, wherein the wire guiding tube (4) comprises ceramic, preferably is made of brass and ceramic.

4. An electrode according to one of the preceding claims 1 to 3, wherein a gap (10) is provided between the wire guiding tube (4) and the electrode (1), wherein the gap is between 0,25 mm and 3 mm.

5. An electrode according to one of the preceding claims 1 to 5, wherein the wire guiding tube (4) has a rear end and a front end, wherein the rear end has a greater diameter than it at the front end.

6. An electrode according to one of the preceding claims 1 to 6, wherein a fixing mechanism is provided to attach the wire guiding tube (4) in the hollow electrode (2), so that the wire guiding tube is fixed relative to the electrode.

7. A welding torch (7) comprising.
- a main torch body (8) having a rear end and a front end,
- a wire feeding conduit (9) which extends through the main torch body for guiding a wire in direction to the front end,
- an electrode (1) according to one of the claims 1 to 6, wherein it is connected to the front end of the main torch body,

8. A torch according to claim 7, wherein the wire guiding tube (4) is connected to the wire feeding conduit (9) via an adaptor (6).

9. A torch according to claim 8, wherein the adaptor comprises multiple slots which are used to guide gas into the wire guiding tube (4).

10. A torch according to one of the claims 7 to 9, wherein a wire straightening tool is provided to maintain the wire in a central position.

11. A method of welding a workpiece using a torch according to one of the claims 7 to 10, wherein a wire is fed by the wire feeding conduit and the wire guiding tube with a wire feeding speed in the direction towards the workpiece, wherein a main current source is provided to connect the electrode (1) and the workpiece to generate a main current.

12. A method according to claim 11, wherein the electrode (1) is negative polarized.

13. A method according to claim 11 or 12, wherein a second current source is provided between the wire and the workpiece or only provided to heat a section of the wire without conducting a current through the workpiece to preheat the wire.

14. A method according to one of the claims 11 to 13, when stopping the welding, the wire feeding speed ramps down and the main current ramps down synchronically at a matching rate to the wire feeding speed.

15. A method according to one of the claims 11 to 14, wherein the main current transfers between the electrode and the wire and it is controlled by a current transfer switch or pulsing the main current.
